(19) **Europäisches Patentamt**
**European Patent Office**
**Office européen des brevets**

(11) Veröffentlichungsnummer : **0 318 681 B1**

(12) # EUROPÄISCHE PATENTSCHRIFT

(45) Veröffentlichungstag der Patentschrift :
14.08.91 Patentblatt 91/33

(51) Int. Cl.$^5$ : **B60T 13/52**

(21) Anmeldenummer : 88117006.2

(22) Anmeldetag : 13.10.88

(54) Vakuumbremskraftverstärker für Kraftfahrzeuge.

(30) Priorität : 01.12.87 DE 3740691

(43) Veröffentlichungstag der Anmeldung :
07.06.89 Patentblatt 89/23

(45) Bekanntmachung des Hinweises auf die
Patenterteilung :
14.08.91 Patentblatt 91/33

(84) Benannte Vertragsstaaten :
**DE ES FR GB IT**

(56) Entgegenhaltungen :
**GB-A- 2 095 351**
**GB-A- 2 162 268**
**PATENT ABSTRACTS OF JAPAN, band 7, Nr.
55, (M198)(1200), 5. März 1983**

(73) Patentinhaber : **ALFRED TEVES GMBH**
**Guerickestrasse 7**
**W-6000 Frankfurt/Main 90 (DE)**

(72) Erfinder : **Seip, Hermann**
**Taunusstrasse 3**
**W-6368 Bad Vilbel (DE)**
Erfinder : **Wagner, Wilfried**
**Durchhardstrasse 30**
**W-6338 Hüttenberg/Weidenhausen (DE)**
Erfinder : **Jakobi, Ralf**
**Eppsteiner Weg 14**
**W-6237 Liederbach (DE)**

EP 0 318 681 B1

## Beschreibung

Die Erfindung betrifft einen Vakuumbremskraftverstärker für Kraftfahrzeuge, mit einem Unterdruckgehäuse, das durch eine axial bewegliche Wand in eine Unterdruckkammer und eine Arbeitskammer dichtend unterteilt ist, mit einem mechanisch betätigbaren Steuerventil zur Verbindung der Arbeitskammer mit der Unterdruckkammer bzw. mit der Atmosphäre, dessen axial bewegliches Steuerventilgehäuse aus thermoplastischem Kunststoff ausgebildet ist und in einer axialen Bohrung eine gummielastische Reaktionsscheibe aufnimmt, die an einer Druckplatte einer Druckstange anliegt, die die Bremskraft auf einen Betätigungskolben eines unterdruckseitig am Unterdruckgehäuse angebrachten Hauptzylinders überträgt, wobei die bewegliche Wand mit dem Steuerventilgehäuse verbunden ist und eine der axialen Führung der Druckstange dienende, einen radialen Flansch aufweisende Führungshülse vorgesehen ist.

Ein derartiger Vakuumbremskraftverstärker ist aus der älteren Anmeldung der Anmelderin, siehe Dokument DE-A1-3709172.7 bekannt. Das Besondere an diesem Bremskraftverstärker besteht darin, (veröffentlicht am 29.09.88) daß der radiale Flansch der Führungshülse innerhalb der Bohrung des Steuerventilgehäuses axial abgestützt ist und von einem mit dem Steuerventilgehäuse in Verbindung stehenden Halteteil axial formschlüssig umgriffen wird.

Weniger vorteilhaft anzusehen ist bei dem oben erwähnten Bremskraftverstärker die starke Belastung des Steuerventilgehäuses im Bereich der Abstützung des radialen Flansches der Führungshülse beim Auftreten von auf die Druckstange wirkenden Querkräften, die eine Gefahr der Beschädigung des in diesem Bereich dünnwandig ausgebildeten Steuerventilgehäuses mit sich bringt.

Es ist daher Aufgabe der vorliegenden Erfindung einen Vakuumbremskraftverstärker der eingangs genanten Gattung anzugeben, bei dem die oben erwähnte Beschädigungsgefahr weitgehendst vermieden wird.

Diese Aufgabe wird dadurch gelöst, daß die Führungshülse einen axialen Fortsatz aufweist, der, die Druckplatte sowie die Reaktionsscheibe aufnehmend, in der axialen Bohrung des Steuerventilgehäuses abgedichtet angeordnet ist.

Es wird also ein Vakuumbremskraftverstärker für Kraftfahrzeuge geschaffen, bei dem eine erhebliche Erhöhung der Funktionssicherheit unter Verwendung von kostengünstigen Einzelteilen erreicht wird. Gleichzeitig wird durch die erfindungsgemäße Ausbildung des Bremskraftverstärkers eine hervorragende Führung der Druckstange gewährleistet. Außerdem bietet diese Maßnahme einen wirksamen Schutz des Kunststoff-Steuerventilgehäuses vor den hohen Drücken in der Reaktionsscheibe.

Eine vorteilhafte Weiterbildung des Erfindungsgegenstandes sieht vor, daß die Führungshülse in der axialen Bohrung mittels eines Halteringes gehalten wird, der in einer an druckstangenseitigem Ende der Bohrung ausgebildeten radialen Ausnehmung angeordnet ist, wobei der Ausgangswerkstoff des Halteringes dem des Steuerventilgehäuses entspricht und dessen Verbindung mit dem Steuerventilgehäuse durch Ultraschallverschweißen erfolgt. Durch diese Maßnahme wird eine höhere Festigkeit der Verbindung der Druckstange mit dem Steuerventilgehäuse erreicht, die vor allem bei Bremskraftverstärkern größeren Durchmesser wichtig ist.

Eine vorteilhafte Vereinfachung des Erfindungsgegenstandes wird dadurch erreicht, daß der axiale Fortsatz der Führungshülse gegenüber dem Durchmesser der axialen Bohrung ein Übermaß aufweist, so daß die beiden Teile mittels eines Preßsitzes verbunden sind, wobei die Wandung der axialen Bohrung mit axialen Rippen versehen sein kann, um die elastische Verformung besser aufzunehmen.

Um die Verwendung des Steuerventilgehäuses für alle gewünschten Übersetzungen des Verstärkers zu ermöglichen wird nach einem weiteren Merkmal der Erfindung vorgesehen, daß der axiale Fortsatz der Führungshülse einen eine zwischen dem Steuerventilkolben und der Reaktionsscheibe angeordnete Übersetzungsscheibe führenden metallischen Übersetzungsring teilweise umgreift, der sich einerseits an der Reaktionsscheibe und andererseits am Boden der axialen Bohrung abstützt, wobei die Abdichtung des axialen Fortsatzes gegenüber dem Steuerventilgehäuse mittels eines Dichtringes erfolgt, der zwischen der Wandung der axialen Bohrung und der radial außen liegenden Oberfläche des Übersetzungsringes angeordnet ist. Diese Maßnahme ermöglicht es, das zwischen der Übersetzungsscheibe und dem Übersetzungsring vorhandene radiale Spiel möglichst gering zu halten, so daß die Gefahr einer Beschädigung der unter hohem Druck stehenden Reaktionsscheibe in diesem Bereich vermieden wird.

Eine weitere Vereinfachung des erfindungsgemäßen Bremskraftverstärkers wird nach einer vorteilhaften Weiterbildung dadurch erreicht, daß der axiale Fortsatz in eine axiale Ausnehmung eingreift, die im Steuerventilgehäuse eine radiale Ringfläche begrenzt, deren Größe die Übersetzung des Brmeakraftverstärker bestimmt, wobei die Abdichtung des axialen Fortsatzes gegenüber dem Steuerventilgehäuse mittels der Reaktionsscheibe erfolgt.

Weitere Einzelheiten und Vorteile des erfindungsgemäßen Vakuumbremskraftverstärkers ergeben sich aus der nachfolgenden Beschreibung von drei Ausführungsbeispielen der Erfindung, die anhand der beiliegenden Zeichnung näher erläutert sind, wobei die einander entsprechenden Teile mit den gleichen Bezugszeichen versehen sind.

Es zeigt

Fig. 1 einen Teil-Längsschnitt einer ersten Ausführung des Vakuumbremskraftverstärkers nach der Erfindung ;

Fig. 2 einen Teil-Längsschnitt einer zweiten Ausführung des Vakuumbremskraftverstärkers nach der Erfindung ;

Fig. 3 einen Teil-Längsschnitt einer dritten Ausführung des Vakuumbremskraftverstärkers nach der Erfindung und

Fig. 4 den Schnitt A-A nach Fig. 3

Das Unterdruckgehäuse des Bremskraftverstärkers besteht aus zwei an einer Verbindungsstelle miteinander lancierten Gehäuseteilen, von denen, der besseren Übersichtlichkeit wegen, nur die bremspedalseitige Gehäusehälfte 7 teilweise dargestellt ist. Der Innenraum des Unterdruckgehäuses wird durch einen Verstärkerkolben 19 in eine Unterdruckkammer 20, die über einen Vakuumanschluß mit einer Vakuumquelle verbunden ist (nicht näher dargestellt), und eine Arbeitskammer 23 unterteilt. Der Verstärkerkolben 19 weist eine in der Arbeitskammer 23 daran anliegende Rollmembran 18 und ein mit dem Verstärkerkolben 19 und der Rollmembran 18 verbundenes, zweiteilig ausgebildetes Steuerventilgehäuse 10 auf. Die Rollmembran 18 ist an der Verbindungsstelle 26 druckdicht eingespannt und umgreift mit ihrem inneren Abschnitt den Innenrand 43 des Verstärkerkolbens 19 und dichtet diesen gegenüber dem vorderen Teil des Steuerventilgehäuses ab. Das Steuerventilgehäuse 10 ragt mit seinem zylindrischen Führungsteil 4 aus dem Verstärkergehäuse heraus und wird mittels eines Faltenbalges 27 gegen Verschmutzung seiner Oberfläche geschützt. Das Steuerventilgehäuse 10 dichtet mit einem Gleitführungsring 5 die Arbeitskammer 23 nach außen hin ab.

Im Inneren des Steuerventilgehäuses 10 ist eine aus Kolbenstange 13 und Ventilkolben 16 zusammengesetzte Steuerstange axial verschiebbar angeordnet, die über einen nicht näher dargestellten Gabelkopf mit einem Bremspedal eines Kraftfahrzeuges verbindbar ist. Das Steuerventilgehäuse 10 enthält ferner eine Ventilanordnung 1, 9, 12, die von dem Ventilkolben 16 betätigt wird und über Kanäle 36, 37 die Druckdifferenz zwischen Unterdruckkammer 20 und Arbeitskammer 23 steuert. Der in der Unterdruckkammer 20 angeordnete Vorderteil 2 des Steuerventilgehäuses 10 weist ferner eine axiale Bohrung 3 auf, deren Aufgabe nachfolgend beschrieben ist. Eine Druckstange 29 betätigt einen an der Stirnseite des Bodens des Verstärkergehäuses befestigten, nicht näher dargestellten Hauptbremszylinder.

Um eine präzise Führung der Druckstange 29 zu erzielen ist eine Führungshülse 14 vorgesehen, deren axialer Fortsatz 22 in die axiale Bohrung 3 des Vorderteiles 2 eingeführt ist und der Führung einer darin angeordneten Reaktionsscheibe 30 sowie einer zwischen der Reaktionsscheibe 30 und dem steuergehäuseseitigen Ende der Druckstange 29 vorgesehenen Druckplatte 17 dient. Vom axialen Fortsatz 22 der Führungshülse 14 wird teilweise ein metallischer Übersetzungsring 33 umgriffen, in dessen Bohrung eine Übersetzungscheibe 6 angeordnet ist, die mit dem Steuerventilkolben 16 zusammenwirkt und deren mit der Reaktionsscheibe 30 in Berührung stehende Fläche mit der ringförmigen Stirnfläche des Übersetzungsringes 33 die Übersetzung des erfindungsgemäßen Vakuumbremskraftverstärkers bestimmt. Gegenüber dem Vorderteil 2 des Steuerventilgehäuses 10 bzw. dessen axialer Bohrung 3 ist die durch einen Haltering 31 gesicherte Führungshülse 14 mittels eines Dichtringes 34 abgedichtet, der im radialen Spalt zwischen der Oberfläche des Übersetzungsringes 33 und der Wandung der axialen Bohrung 3 angeordnet ist. Der Haltering 31, dessen Ausgangswerkstoff vorzugsweise mit dem des Vorderteiles 2 des Steuerventilgehäuses 10 identisch ist, ist in dessen radialer Ausnehmung 21 angeordnet und mit ihm mittels Ultraschall verschweißt.

Zum Zurückstellen des Verstärkerkolbens 19 ist eine Rückstellfeder 25 vorgesehen, die zwischen dem Vorderteil 2 des Steuerventilgehäuses 10 und dem Boden des Verstärkergehäuses eingespannt ist.

Die Steuerbaugruppe des Vakuumbremskraftverstärkers ist in der Lösestellung dargestellt, d.h. in einer Stellung, in der die beiden Kammern 20, 23 voneinander getrennt sind. In dieser Stellung liegen nämlich die beiden Dichtsitze 9, 12 an der Dichtfläche eines Tellerventils 1 an, das auf seiner der Dichtfläche abgewandten Seite einen Anschlag 8 aufweist, der über eine Hülse 38 im Führungsteil 4 anschlägt. Das Führungsteil 4 liegt in der Lösestellung mit seinem Kragen 28 am Gleitführungsring 5 an, wobei der Dichtsitz 9 am Steuerventilkolben 16 von einer Kolbenstangenrückholfeder 11 gegen die Dichtfläche des Tellerventils 1 gedrückt wird. Das Tellerventil 1 wird gleichzeitig in Richtung auf die beiden Dichtsitze 9, 12 zu mittels einer Druckfeder 15 vorgespannt, die sich mit deren anderem Ende an der Hülse 38 abstützt. Außerdem ist eine zweite Druckfeder 39 vorgesehen, die sich einerseits an einer Führung 40 des Tellerventils 1 und andererseits an einer ringförmigen Fläche 41 der Hülse 38 abstützt und die beiden Steuerventilgehäuseteile 2, 4 auseinander hält.

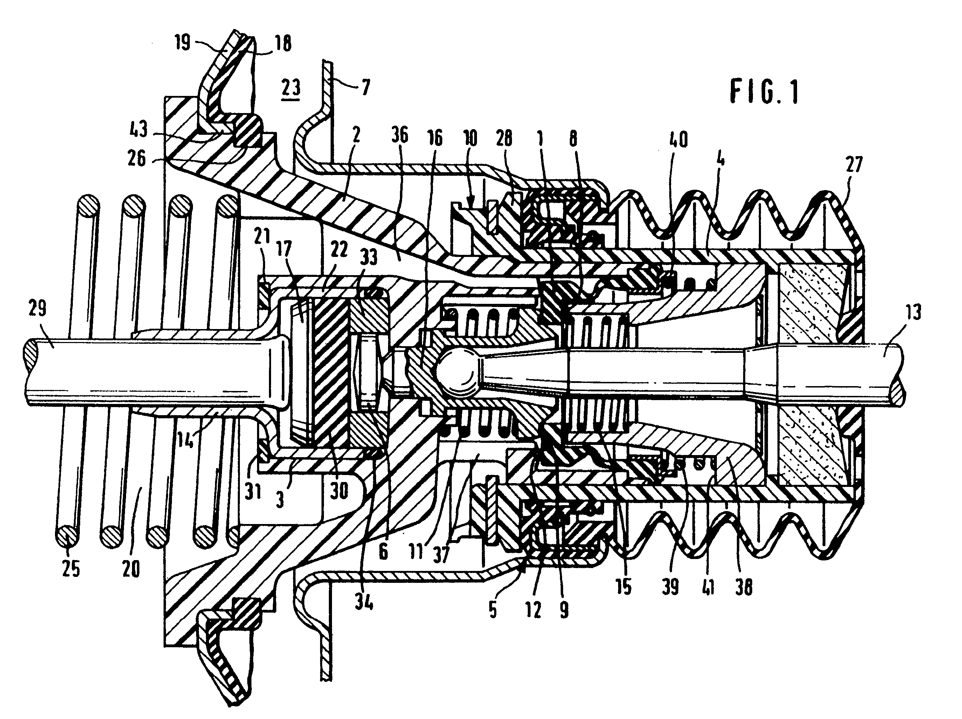

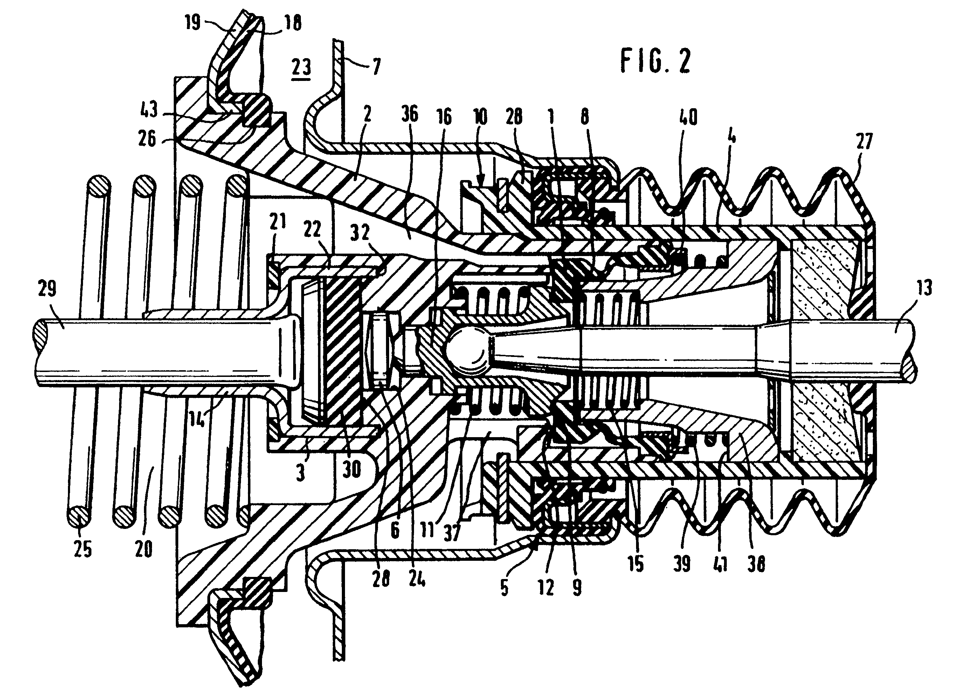

Bei der in Fig. 2 gezeigten Ausführungsform des Erfindungsgegenstandes wird der Übersetzungsring 33 (Fig. 1) durch eine im Vorderteil 2 des Steuerventilgehäuses 10 ausgebildete radiale Ringfläche 28 ersetzt, die einerseits durch eine die Übersetzungsscheibe 6 aufnehmende Bohrung 24 und andererseits durch eine axiale Ausnehmung 32 begrenzt ist. In diese Ausnehmung 32 greift das Ende des axialen Fortsatzes 22 hinein, wobei dessen Abdichtung gegenüber der axialen Bohrung 3 von der Reaktionsscheibe 30 übernommen wird.

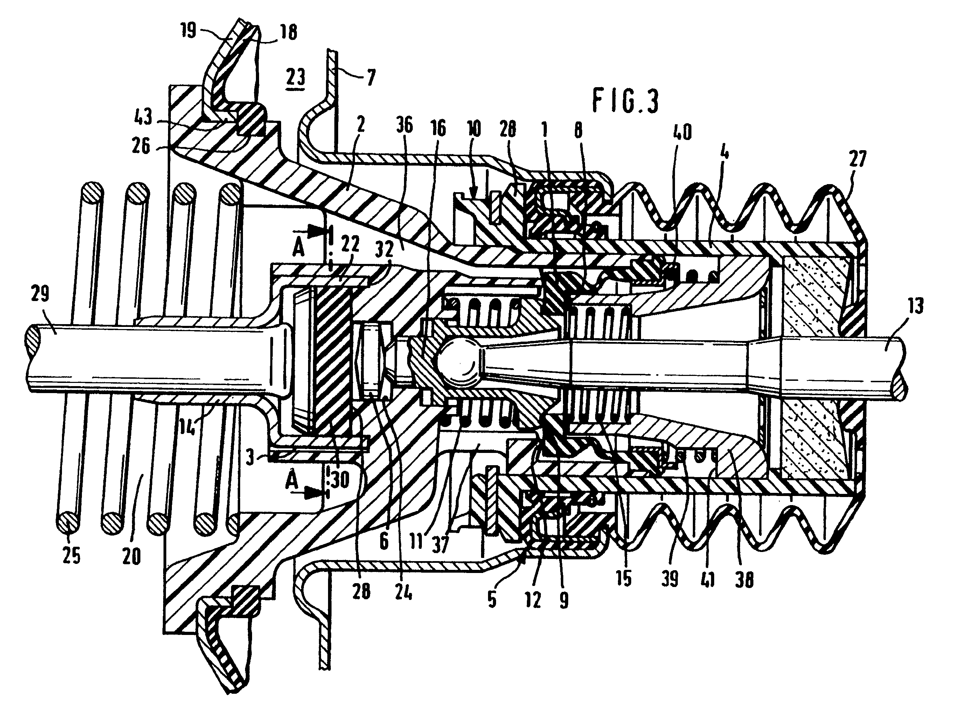

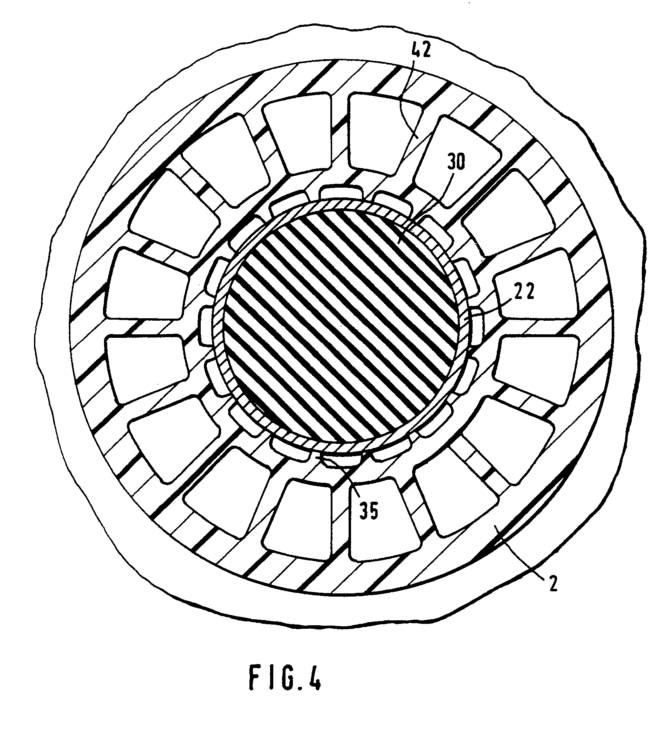

Eine ähnliche Anordnung zeigen schließlich die Fig. 3 und 4. Bei diesem Ausführungsbeispiel ist der axiale Fortsatz 22 der Führungshülse 14 so ausgebildet, daß er gegenüber dem Durchmesser der axialen Bohrung 3 des Vorderteiles 2 ein Übermaß aufweist, so daß der axiale Fortsatz 22 bei der Montage der Führungshülse 14 in die axiale Bohrung 3 kraftschlüssig eingepreßt wird. Die Wandung der axialen Bohrung ist dabei vorzugsweise mit axialen Rippen 35 versehen, die eine größere elastische Dehnung bei der Montage ermöglichen. Die axialen Rippen 35 sind dann sinnvollerweise zwischen den äußeren Versteifungsrippen 42 des Vorderteiles 2 des Steuerventilgehäuses 10 anzuordnen.

Bezugszeichenliste

1 Tellerventil
2 Vorderteil
3 Bohrung
4 Führungsteil
5 Gleitführungsring
6 Übersetzungsscheibe
7 Verstärkergehäusehälfte
8 Anschlagfläche
9 Dichtsitz
10 Steuerventilgehäuse
11 Feder
12 Dichtsitz
13 Kolbenstange
14 Führungshülse
15 Feder
16 Steuerventilkolben
17 Druckplatte
18 Rollmembran
19 Verstärkerkolben
20 Unterdruckkammer
21 Ausnehmung
22 Fortsatz
23 Arbeitskammer
24 Bohrung
25 Rückstellfeder
26 Verbindungsstelle
27 Faltenbalg
28 Ringfläche
29 Druckstange
30 Reaktionsscheibe
31 Haltering
32 Ausnehmung
33 Übersetzungsring
34 Dichtring
35 axiale Rippen
36 Kanal
37 Kanal
38 Hülse
39 Druckfeder
40 Führung
41 Fläche
42 äußere Versteifungsrippen
43 Innenwand

**Patentansprüche**

1. Vakuumbremskraftverstärker für Kraftfahrzeuge, mit einem Unterdruckgehäuse (7), das durch eine axial bewegliche Wand (18, 19) in eine Unterdruckkammer (20) und eine Arbeitskammer (23) dichtend unterteilt ist, mit einem mechanisch betätigbaren Steuerventil (1, 9, 12) zur Verbindung der Arbeitskammer (23) mit der Unterdruckkammer (20) bzw. mit der Atmosphäre, dessen axial bewegliches Steuerventilgehäuse (10) aus thermoplastischem Kunststoff ausgebildet ist und in einer axialen Bohrung (3) eine gummielastische Reaktionsscheibe (30) aufnimmt, die an einer Druckplatte (17) einer Druckstange (29) anliegt, die die Bremskraft über eine Druckstange auf einen Betätigungskolben eines unterdruckseitig am Unterdruckgehäuse angebrachten Hauptzylinders überträgt, wobei die bewegliche Wand (18, 19) mit dem Steuerventilgehäuse (10) verbunden ist und eine der axialen Führung der Druckststange (29) dienende, einen radialen Flansch aufweisende Führungshülse (14) vorgesehen ist, dadurch **gekennzeichnet**, daß die Führungshülse (14) einen axialen Fortsatz (22) aufweist, der, die Druckplatte (17) sowie die Reaktionsscheibe (30) aufnehmend, in der axialen Bohrung (3) des Steuerventilgehäuses (10) abgedichtet angeordnet ist.

2. Vakuumbremskraftverstärker nach Anspruch 1, dadurch **gekennzeichnet**, daß die Führungshülse (14) in der axialen Bohrung (3) mittels eines Halteringes (31) gehalten wird, der in einer an druckstangenseitigem Ende der Bohrung (3) ausgebildeten radialen Ausnehmung (21) angeordnet ist.

3. Vakuumbremskraftverstärker nach Anspruch 2, dadurch **gekennzeichnet**, daß der Haltering (31) als Krallring ausgebildet ist.

4. Vakuumbremskraftverstärker nach Anspruch 2, dadurch **gekennzeichnet**, daß der Ausgangswerkstoff des Halteringes (31) dem des Steuerventilgehäuses entspricht und dessen Verbindung mit dem Steuerventilgehäuse (10) durch Ultraschallverschweißen erfolgt.

5. Vakuumbremskraftverstärker nach Anspruch 2, dadurch **gekennzeichnet**, daß die Verbindung des Halteringes (31) mit dem Steuerventilgehäuse durch Verkleben der beiden Teile erfolgt.

6. Vakuumbremskraftverstärker nach Anspruch 1, dadurch **gekennzeichnet**, daß der axiale Fortsatz (22) der Führungshülse (14) gegenüber dem Durchmesser der axialen Bohrung (3) ein Übermaß aufweist, so daß die beiden Teile (22 bzw. 14 und 3) mittels eines Preßsitzes verbunden sind.

7. Vakuumbremskraftverstärker nach Anspruch 6, dadurch **gekennzeichnet**, daß die Wandung der axialen Bohrung (3) mit axialen Rippen (35) versehen ist.

8. Vakuumbremskraftverstärker nach einem der Ansprüche 1 bis 7, dadurch **gekennzeichnet**, daß der axiale Fortsatz (22) der Führungshülse (14) einen eine zwischen dem Steuerventilkolben (16) und der Reaktionsscheibe (30) angeordnete Übersetzungsscheibe (6) führenden Übersetzungsring (33) teilweise umgreift, der sich einerseits an der Reaktionsscheibe (30) und andererseits am Boden der axialen Bohrung (3) abstützt.

9. Vakuumbremskraftverstärker nach einem der Ansprüche 1 bis 7, dadurch **gekennzeichnet**, daß der axiale Fortsatz (22) in eine axiale Ausnehmung (32) hineingreift, die im Steuerventilgehäuse eine radiale Ringfläche (28) begrenzt, deren Größe die Übersetzung des Bremskraftverstärkers bestimmt.

10. Vakuumbremskraftverstärker nach Anspruch 8, dadurch **gekennzeichnet**, daß die Abdichtung des axialen Fortsatzes (22) gegenüber dem Steuerventilgehäuse mittels eines Dichtringes (34) erfolgt, der zwischen der Wandung der axialen Bohrung (3) und der radial außen liegenden Oberfläche des Übersetzungsringes (33) angeordnet ist.

11. Vakuumbremskraftverstärker nach Anspruch 9, dadurch **gekennzeichnet**, daß die Abdichtung des axialen Fortsatzes (22) gegenüber dem Steuerventilgehäuse mittels der Reaktionsscheibe (30) erfolgt.

**Claims**

1. A vacuum brake force booster for use with automotive vehicles, comprising a vacuum housing (7) sealingly subdivided by an axially movable wall (18, 19) into a vacuum chamber (20) and a working chamber (23), further comprising a mechanically actuatable control valve (1, 9, 12) for connecting the working chamber (23) to the vacuum chamber (20) and to the atmosphere, respectively, with the axially movable control valve housing (10) thereof being formed of thermoplastics material and accommodating, within an axial bore (3), a rubberelastic reaction disc (30) which is in abutment with a pressure plate (17) of a pushrod (29) transmitting the brake force, through a pushrod, to an actuating piston of a master cylinder vacuum-sidedly provided on the vacuum housing, with the movable wall (18, 19) being in communication with the control valve housing (10), and there being provision of a guiding sleeve (14) serving for the axial guidance of the pushrod (29) and comprising a radial flange, characterized in that the guiding sleeve (14) includes an axial extension (22) which, while accommodating the pressure plate (17) and the reaction disc (30), is sealingly disposed in the axial bore (3) of the control valve housing (10).

2. A vacuum brake force booster according to claim 1, characterized in that the guiding sleeve (14), by means of a retaining ring (31), is held in the axial bore (3), with the said retaining ring (31) being located within a radial recess (21) formed on the pushrod-sided end of the bore (3).

3. A vacuum brake force booster according to claim 2, characterized in that the retaining ring (31) is of claw ring-type configuration.

4. A vacuum brake force booster according to claim 2, characterized in that the basic material of the retaining ring (31) corresponds to that of the control valve housing and that the connection thereof to the control valve housing (10) is effected by ultrasonic welding.

5. A vacuum brake force booster according to claim 2, characterized in that the connection of the retaining ring (31) to the control valve housing is by cementing together the two parts.

6. A vacuum brake force booster according to claim 1, characterized in that the axial extension (22) of the guiding sleeve (14) over the diameter of the axial bore (3) is over-dimensioned so that the two parts (22 and 14, respectively) are interconnected by press fit.

7. A vacuum brake force booster according to claim 6, characterized in that the wall of the axial bore (3) is provided with axial ribs (35).

8. A vacuum brake force booster according to any one of claims 1 to 7, characterized in that the axial extension (22) of the guiding sleeve (14) partly straddles a transmission ring (33) guiding a transmission disc located between the control valve piston (16) and the reaction disc (30), with the transmission ring (33), on the one hand, being supported on the reaction disc (30) and, on the other hand, being supported on the bottom of the axial bore (3).

9. A vacuum brake force booster according to any one of claims 1 to 7, characterized in that the axial extension (22) engages an axial recess (32) confining, within the control valve housing, a radial annular face (28) the quantity of which determines the transmission ratio of the brake force booster.

10. A vacuum brake force booster according to claim 8, characterized in that the sealing of the axial extension (22) against the control valve housing is effected by means of a gasket (34) located between the wall of the axial bore (3) and the radially outwardly disposed surface of the transmission ring (33).

11. A vacuum brake force booster according to claim 9, characterized in that the sealing of the axial extension (22) against the control valve housing is effected by means of the reaction disc (30).

## Revendications

1. Amplificateur d'effort de freinage à dépression, pour véhicule automobile, comprenant un boîtier à dépression (7), qui est divisé d'une manière étanche par une paroi mobile axialement (18, 19) en une chambre à dépression (20) et une chambre de travail (23), une valve de commande (1, 9, 12) agencée de façon à pouvoir être manoeuvrée mécaniquement et permettant de faire communiquer la chambre de travail (23) avec la chambre à dépression (20) ou avec l'atmosphère, le boîtier (10), mobile axialement, de cette valve de commande étant en matière thermoplastique et recevant, dans un alésage axial (3), un disque de réaction (30), à élasticité du type de celle du caoutchouc, qui prend appui sur une plaque de pression (17) d'une tige de pression (29) qui, par l'intermédiaire de cette tige de pression, transmet la force de freinage à un piston de manoeuvre d'un maître-cylindre monté sur le boîtier à dépression du côté de la dépression, tandis que la paroi mobile (18, 19) est solidaire du boîtier de valve de commande (10) et qu'il est prévu une douille de guidage (14) servant au guidage axial de la tige de pression (29) et comportant une collerette radiale, caractérisé en ce que la douille de guidage (14) comporte un prolongement axial (22) qui, en recevant la plaque de pression (17), ainsi que le disque de réaction (30), est disposé d'une manière étanche dans l'alésage axial (3) du boîtier de valve de commande (10).

2. Amplificateur d'effort de freinage à dépression suivant la revendication 1, caractérisé en ce que la douille de guidage (14) est maintenue dans l'alésage axial (3) à l'aide d'un anneau de blocage (31) qui est disposé dans un évidement radial (21) ménagé dans une extrémité de l'alésage (3) située du côté de la tige de pression.

3. Amplificateur d'effort de freinage à dépression suivant la revendication 2, caractérisé en ce que l'anneau de blocage (31) est réalisé sous la forme d'un anneau à griffes.

4. Amplificateur d'effort de freinage à dépression suivant la revendication 2, caractérisé en ce que la matière première de l'anneau de blocage (31) correspond à celle du boîtier de valve de commande et la solidarisation de cet anneau de blocage avec ce boîtier de valve de commande (10) s'effectue par soudage aux ultrasons.

5. Amplificateur d'effort de freinage à dépression suivant la revendication 2, caractérisé en ce que la solidarisation de l'anneau de blocage (31) avec le boîtier de valve de commande s'obtient par collage des deux pièces.

6. Amplificateur d'effort de freinage à dépression suivant la revendication 1, caractérisé en ce que le prolongement axial (22) de la douille de guidage (14) présente une dimension en excès par rapport au diamètre de l'alésage axial (3), de sorte que les deux pièces (22 ou 14 et 3) sont rendues solidaires par un ajustement serré.

7. Amplificateur d'effort de freinage à dépression suivant la revendication 6, caractérisé en ce que la paroi de l'alésage axial (3) est pourvue de nervures axiales (35).

8. Amplificateur d'effort de freinage à dépression suivant l'une des revendications 1 à 7, caractérisé en ce que le prolongement axial (22) de la douille de guidage (14) entoure partiellement une bague d'amplification (33) qui guide un disque d'amplification (6) disposé entre le piston de valve de commande (16) et le disque de réaction (30) et qui s'appuie d'une part sur ce disque de réaction (30) et d'autre part sur le fond de l'alésage axial (3).

9. Amplificateur d'effort de freinage à dépression suivant l'une des revendications 1 à 7, caractérisé en ce que le prolongement axial (22) s'emboîte dans un évidement axial (32) qui délimite, dans le boîtier de valve de commande, une surface annulaire radiale (28) dont la dimension détermine le rapport d'amplification de l'amplificateur d'effort de freinage.

10. Amplificateur d'effort de freinage à dépression suivant la revendication 8, caractérisé en ce que l'étanchéité du prolongement axial (22) vis-à-vis du boîtier de valve de commande s'obtient à l'aide d'une bague d'étanchéité (34) qui est disposée entre la paroi de l'alésage axial (3) et la surface radialement extérieure de la bague d'amplification (33).

11. Amplificateur d'effort de freinage à dépression suivant la revendication 9, caractérisé en ce que l'étanchéité du prolongement axial (22) par rapport au boîtier de valve de commande s'obtient à l'aide du disque de réaction (30).

FIG. 1

FIG. 2

EP 0 318 681 B1

FIG.3

EP 0 318 681 B1

FIG.4